# EUROPEAN PATENT SPECIFICATION

(11) **EP 4 084 569 B1**
(45) Date of publication and mention of the grant of the patent: **11.06.2025**
(21) Application number: 20907251.1
(22) Date of filing: 29.10.2020
(51) Int. Cl.: H04W 76/15, H04W 36/00, H04W 76/34, H04W 36/24, H04W 36/08

(54) **OPTIMIZED HANDOVER PROCESS BETWEEN DIFFERENT CELLS**
OPTIMIERTER HANDOVER-PROZESS ZWISCHEN VERSCHIEDENEN ZELLEN
OPTIMISATION DU PROCESSUS DE TRANSFERT ENTRE DIFFÉRENTES CELLULES

(30) Priority: 25.12.2019 CN 201911353404
(43) Date of publication of application: 02.11.2022
(73) Proprietor: ZTE Corporation, Shenzhen, Guangdong 518057 (CN)
(72) Inventor: REN, Wenjie, Shenzhen, Guangdong 518057 (CN)
(74) Representative: Novagraaf Technologies
(86) International application number: PCT/CN2020/124940
(87) International publication number: WO 2021/129135

(56) References cited:
- EP-A1- 2 775 758
- EP-A1- 2 928 247
- EP-A1- 3 079 430
- WO-A1-2014/084111
- CN-A- 102 387 508
- CN-A- 104 540 158
- CN-A- 105 247 941
- US-A1- 2017 303 288
- "3rd Generation Partnership Project; Technical Specification Group Radio Access Network; NR; NR and NG-RAN Overall Description; Stage 2 (Release 15)", 3GPP STANDARD; TECHNICAL SPECIFICATION; 3GPP TS 38.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V1.1.0, 15 January 2018 (2018-01-15), pages 1 - 59, XP051392664
- "3rd Generation Partnership Project; Technical Specification Group Radio Access Network; Evolved Universal Terrestrial Radio Access (E-UTRA) and NR; Multi-connectivity; Stage 2 (Release 16)", 19 December 2019 (2019-12-19), XP051841209, Retrieved from the Internet <URL:https://ftp.3gpp.org/tsg_ran/WG2_RL2/Specifications/201912_draft_specs_after_RAN_86/Draft_37340-g00.docx> [retrieved on 20191219]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 16)", 19 December 2019 (2019-12-19), XP051841198, Retrieved from the Internet <URL:https://ftp.3gpp.org/tsg_ran/WG2_RL2/Specifications/201912_draft_specs_after_RAN_86/Draft_36300-g00.docx> [retrieved on 20191219]

## Description

### Technical Field

The present application relates to the field of communications, and in particular, to a communication method, a communication system, a communication device, and a computer-readable storage medium.

### Background

With the development and popularization of communication technologies, frequency bands used in wireless communication become higher and higher, coverage ranges become smaller correspondingly, and the number of users in a cell also decreases correspondingly. However, users in a cell have a higher demand for data traffic, and in order to meet network usage demands of users with a large traffic, a situation of multi-cell coverage appears in many regions. In order to ensure the quality of network communications, User Equipment (UE) generally needs to perform handover among a plurality of cells.

However, the inventor of the present application finds that, although in some situations the UE has a fast cell handover speed, seamless handover still cannot be achieved, and a network service of the UE is affected. 3GPP TS 38.300 and 3GPP DRAFT_37340-G00 form part of the prior art.

### Summary

Embodiments of the present application provide a communication method, a communication system, a communication device, and a computer-readable storage medium.

The present application is set out in the appended set of claims.

In order to solve the described technical problem, the embodiments of the present application provide a communication method, including the following operations: forming a secondary cell in communication connection with a primary cell, wherein the number of channels for transmitting system information in the secondary cell is less than a preset threshold; obtaining, from UEs accessing the primary cell, a target UE which satisfies a preset condition; and establishing communication connection between the target UE and the secondary cell.

The embodiments of the present application also provide a communication system, including a primary cell and a secondary cell which are in communication connection with each other, wherein the number of channels for transmitting system information in the secondary cell is less than a preset threshold; and the primary cell and the secondary cell are used for performing the foregoing communication method.

The embodiments of the present application also provide a communication device, including: at least one processor and a memory in communication connection with the at least one processor; the memory stores an instruction that is able to be executed by the at least one processor, and the instruction, when being executed by the at least one processor, causes the at least one processor to execute the foregoing communication method.

The embodiments of the present application also provide a computer-readable storage medium, which stores a computer program, and the computer program, when being executed by a processor, implements the foregoing communication method.

### Brief Description of the Drawings

Fig. 1 is a flowchart of a communication method
Fig. 2 is a flowchart of establishing a new cell as a secondary cell in a communication method
Fig. 3 is a flowchart of converting a primary cell into a secondary cell in a communication method
Fig. 4 is a flowchart of a communication method
Fig. 5 is a flowchart of a communication method
Fig. 6 is a flowchart of a communication method
Fig. 7 is a flowchart of converting a secondary cell into a primary cell in a communication method
Fig. 8 is a flowchart of a communication method
Fig. 9 is a flowchart of a communication method
Fig. 10 is a schematic structural diagram of a communication system
Fig. 11 is a schematic structural diagram of a communication device

### Detailed Description

In order to make the objectives, technical solutions, and advantages of the present application more comprehensible, the embodiments of the present application are described in detail below with reference to the accompanying drawings. However, a person having ordinary skill in the art may understand that, in the embodiments of the present application, many technical details are provided to enable a reader to better understand the present application. However, even without these technical details and based on various changes and modifications of the following embodiments, the claimed technical solutions of the present application can also be implemented.

The embodiments of the present application provide a communication method, a communication system, a communication device, and a computer-readable storage medium, which effectively reduce handover of a UE between different cells while ensuring network usage demands of the UE.

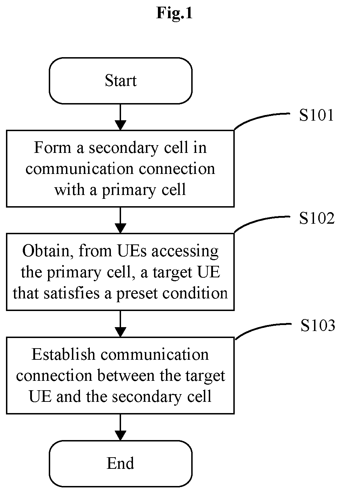

A first embodiment of the present application relates to a communication method. As shown in Fig. 1, the method includes operations described in detail below.

At operation S101, a secondary cell in communicative connection with a primary cell is formed.

In this operation, the secondary cell is a special communication cell, in which the number of channels for transmitting system information is less than a preset threshold. Since the number of channels for transmitting the system information in the secondary cell is small, the secondary cell cannot send a sufficient amount of system information, such as broadcast, access, and control information, to the UE. As a result, the UE does not use the secondary cell as an independent communication cell, and the secondary cell does not accept direct access of a UE. The preset threshold may be flexibly set according to actual needs, and in a practical application process, the smaller the preset threshold, the smaller the number of channels that can be used for transmitting system information by the secondary cell. Since the number of channels for transmitting system information in a secondary cell is less than a preset threshold, the channels originally used for transmitting the system information in the secondary cell can be used for transmitting network services of the target UE, thereby effectively improving the data transmission capability of the secondary cell. Meanwhile, when the same amount of network traffic is transmitted, the number of pieces of system information sent by the secondary cell to the UE is small, so that the power consumption of the whole communication system can be effectively reduced.

At operation S102, a target UE which satisfies a preset condition is obtained from UEs accessing the primary cell.

In this operation, a target UE is obtained, that is, a UE with a priority higher than a preset priority or data traffic greater than a preset traffic value is obtained. The priority level and the size of the data traffic can reflect the demand of the UE for the network traffic, and the priority level and the data traffic are used as a basis for obtaining the target UE, thereby effectively ensuring that a UE with a large demand for the network traffic is obtained.

It can be understood that, the described implementation of obtaining a UE with a priority higher than a preset priority or data traffic greater than a preset traffic value as the target UE is only a specific example for description in this embodiment, and does not constitute a limitation. In other embodiments of the present application, a UE with a usage duration greater than a preset duration may alternatively be obtained as the target UE. Other examples are not enumerated herein, and the manner of obtaining the target UE may be flexibly set according to actual needs.

At operation S103, communication connection is established between the target UE and the secondary cell.

In this embodiment, after the communication connection between the target UE and the secondary cell is established, the secondary cell provides a network service for the UE in the form of a secondary carrier. It can be understood that providing, by the secondary cell, the network service for the UE in the form of the secondary carrier is only a specific example for description in this embodiment, and does not serve as a limitation to this embodiment. In a practical application process, the secondary cell may also provide a network service for the UE in other forms such as a dual-link, and the manner that the secondary cell provides the network service for the UE may specifically be flexibly set according to actual demands.

In addition, in this embodiment, in order to enable a UE to be connected to the primary cell and the secondary cell at the same time, a coverage area of the primary cell and a coverage area of the secondary cell should at least partially overlap, thereby ensuring that after the target UE is selected, the target UE can establish communication connection with the secondary cell.

Compared with the related art, in the communication method provided in the first embodiment of the present application, by forming a secondary cell in communication connection with a primary cell, and with regard to a target UE which satisfies a preset condition and has a relatively large network traffic demand in the primary cell, additionally establishing communication connection between the target UE and the secondary cell so that the secondary cell provides a network service for the UE in the form of a secondary carrier, the network usage demand of the target UE with a relatively large demand can be satisfied. Since the number of channels for transmitting system information in the secondary cell is less than the preset threshold, even if a UE establishes communication connection with the secondary cell, the secondary cell sends less system information to the UE, so that the UE does not identify the secondary cell as an independent cell, and does not perform cell handover, thereby effectively reducing the handover of the UE among different cells.

It should be noted that, in this embodiment, the secondary cell may be a new cell established according to a preset parameter, and may alternatively be a secondary cell converted from an existing primary cell by adjusting a relevant parameter of the existing primary cell.

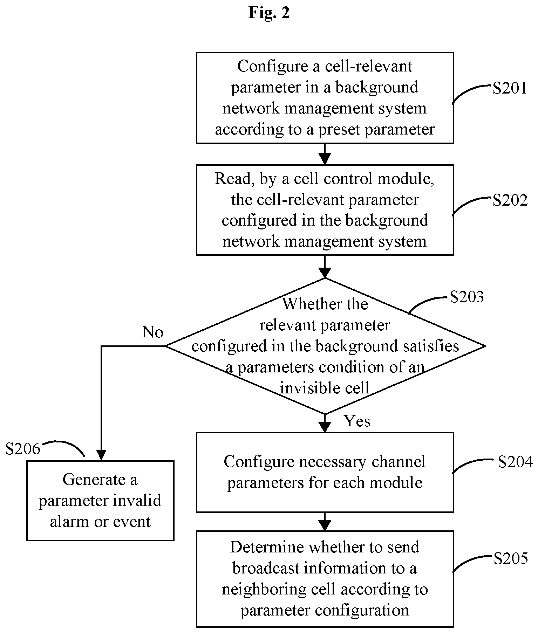

**In** an embodiment, as shown in Fig. 2, the process of establishing a new cell as a secondary cell may include the following operations.

At operation S201, a cell-relevant parameter is configured in a background network management system according to a preset parameter.

At operation S202, a cell control module reads the cell-relevant parameter configured in the background network management system.

At operation S203, it is checked whether the cell-relevant parameter configured in the background network management system satisfies a parameter condition of an invisible cell, in a case where the cell-relevant parameter satisfies the parameter condition, operations S204 and S205 are executed, and otherwise, operation S206 is executed.

At operation S204, necessary channel parameters are configured for each module.

At operation S205, it is determined whether to send broadcast information to a neighboring cell according to parameter configuration.

In this operation, a part of channels for transmitting the system information, such as a control channel and a random access channel, may be configured at a small amount or may not be configured. Whether to send Master Information Blocks (MIBs) and System Information Blocks (SIBs) may be determined according to practical demands. In addition, the period of the SIB may be configured longer when the SIB is transmitted. By means of this arrangement, some channels for transmitting system information can be used for transmitting network service data, and time-frequency resources originally used for transmitting system information can be saved. In addition, resource blocks used for scheduling network service data can be larger and reduce collision avoidance, thereby being more beneficial to scheduling of a large data stream.

At operation S206, a parameter invalid alarm or event is generated.

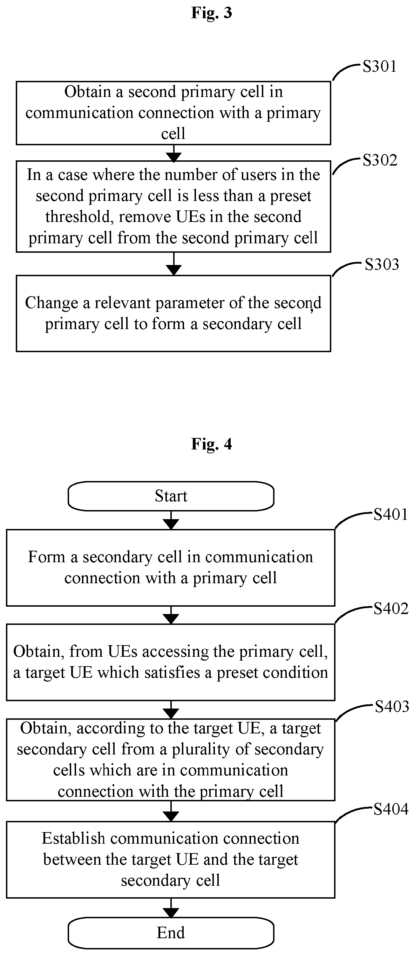

In another implementable solution, the operation of converting an existing primary cell into a secondary cell may be as shown in Fig. 3, including the following operations.

At operation S301, a second primary cell in communication connection with a primary cell is obtained.

At operation S302, in a case where the number of users in the second primary cell is less than a preset threshold, UEs in the second primary cell are removed from the second primary cell.

At operation S303, a relevant parameter of the second primary cell is changed to form a secondary cell.

In this operation, the relevant parameter of the second primary cell is changed mainly to reduce relevant channels for transmitting system parameters in the second primary cell, so that the second primary cell is converted into a secondary cell.

By modifying the relevant parameter of the second primary cell, the second primary cell is converted into a secondary cell, so that it is unnecessary to establish a new cell as a secondary cell, thereby effectively utilizing existing resources, and reducing construction costs of the secondary cell.

Preferably, in the present embodiment, a mode of modifying the relevant parameter of the second primary cell includes an automatic mode and a manual mode. In the automatic mode, a modified numerical value of the relevant parameter needing to be modified is preset, and when it is required to convert the second primary cell into the secondary cell, a preset program is executed to modify the relevant parameter into the preset numerical value, thereby completing the conversion of the primary cell into the secondary cell. In the manual mode, when it is required to convert the second primary cell into the secondary cell, the second primary cell generates an alarm or a notification event to notify an administrator to manually modify the relevant parameter, thereby completing the conversion of the primary cell into the secondary cell.

It can be understood that, the foregoing is only a specific example for describing the formation of a secondary cell in communication connection with a primary cell in this embodiment, and is not intended to limit the present application. In a practical application process, a part of operations may be added, reduced, or modified, which is not listed one by one herein.

A second embodiment of the present application relates to a communication method. The communication method provided by the second embodiment is substantially the same as the communication method provided by the first embodiment, and the difference lies in that, on the basis of the first embodiment, the second embodiment additionally includes an operation of determining, according to the target UE, a target secondary cell from a plurality of secondary cells which are in communication connection with the primary cell. As shown in Fig. 4, the method includes the following operations.

At operation S401, a secondary cell in communication connection with a primary cell is formed.

At operation S402, a target UE which satisfies a preset condition is obtained from UEs accessing the primary cell.

It should be noted that operation S401 and operation S402 in this embodiment are almost the same as operation S101 and operation S102 in the first embodiment, and for details of operation S401 and operation S402, reference may be made to the specific description in the first embodiment, which is not repeated herein.

At operation S403, a target secondary cell is determined, according to the target UE, from a plurality of secondary cells which are in communication connection with the primary cell.

In this operation, after the target UE is obtained, a most suitable secondary cell is selected from a plurality of secondary cells as the target secondary cell according to a priority and/or data traffic of the target UE. A priority of the target secondary cell needs to be greater than the priority of the target UE, and a network service capability of the target secondary cell needs to be greater than the data traffic of the target UE, thereby ensuring that the secondary cell can satisfy the network service demands of the target UE. It can be understood that selecting the target secondary cell according to the priority and/or the data traffic of the target UE is only a specific example for description in this embodiment, and does not serve as a limitation to this embodiment. In other embodiments of the present application, the target secondary cell may alternatively be selected according to the usage duration of the target UE, which is not enumerated herein. The manner for selecting the target secondary cell may be flexibly set according to actual needs.

At operation S404, communication connection is established between the target UE and the target secondary cell.

It should be noted that, operation S404 in this embodiment is almost the same as operation S103 in the first embodiment, and for details of operation S404, reference may be made to the specific description in the first embodiment, which is not described herein again.

Compared with the related art, the communication method provided by the second embodiment of the present application is improved on the basis of the first embodiment. While all the technical effects of the first embodiment are maintained, a corresponding target secondary cell is selected according to the target UE, so that the primary cell and the secondary cell simultaneously provide a network service for the target UE, thereby ensuring that the target secondary cell can satisfy the network service demands of the target UE.

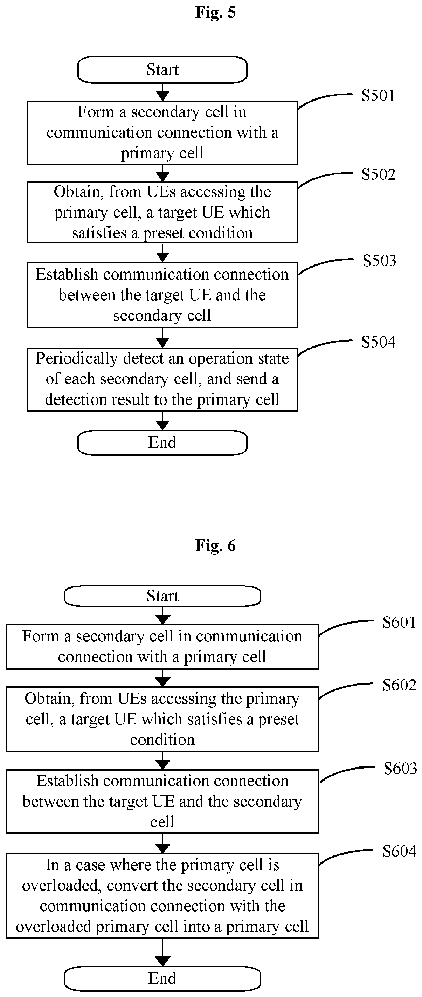

A third embodiment of the present application relates to a communication method. The communication method provided by the third embodiment is substantially the same as the communication method provided by the first embodiment, and the difference lies in that, on the basis of the first embodiment, the third embodiment additionally includes an operation of periodically detecting an operation state of each secondary cell, and sending a detection result to a primary cell. As shown in Fig. 5, the method includes the following operations.

At operation S501, a secondary cell in communication connection with a primary cell is formed.

At operation S502, a target UE which satisfies a preset condition is obtained from UEs accessing the primary cell.

At operation S503, communication connection is established between the target UE and the secondary cell.

It should be noted that operation S501 to operation S503 in this embodiment are almost the same as operation S101 to operation S103 in the first embodiment. For details of operation S501 to operation S503, reference may be made to the specific description in the first embodiment, which is not described herein again.

At operation S504, an operation state of each secondary cell is periodically detected, and a detection result is sent to the primary cell.

In this operation, a detection interval duration can be set by means of a detection timer, and the operation state of each secondary cell is detected at intervals, for example, whether an exception occurs in the secondary cell, and/or whether a resource in the secondary cell reaches a preset threshold may be detected, and the detection result may be broadcast to a neighboring primary cell.

Compared with the related art, the communication method provided by the third embodiment of the present application is improved on the basis of the first embodiment. While all the technical effects of the first embodiment are maintained, an operation state of each secondary cell is periodically detected, and a detection result is broadcast to a neighboring primary cell, so that the primary cell knows about the operation state of the secondary cell, and the primary cell does not assign a UE to an abnormal secondary cell, or the primary cell does not assign a UE with a network traffic demand exceeding an operation capability of the secondary cell, so that the network traffic demand of the UE can be satisfied, thereby ensuring that the secondary cell can satisfy the network traffic demand of the UE.

A fourth embodiment of the present application relates to a communication method. The communication method provided by the fourth embodiment is substantially the same as the communication method provided by the first embodiment, and the difference lies in that, on the basis of the first embodiment, the fourth embodiment additionally includes an operation of converting, in a case where a primary cell is overloaded, a secondary cell which is in communication connection with the overloaded primary cell into the primary cell. As shown in Fig. 6, the method includes the following operations.

At operation S601, a secondary cell in communication connection with a primary cell is formed.

At operation S602, a target UE which satisfies a preset condition is obtained from UEs accessing the primary cell.

At operation S603, communication connection is established between the target UE and the secondary cell.

It should be noted that operation S601 to operation S603 in this embodiment are almost the same as operation S101 to operation S103 in the first embodiment. For details of operation S601 to operation S603, reference may be made to the specific description in the first embodiment, and details are not repeatedly described herein.

At operation S604, in a case where the primary cell is overloaded, the secondary cell in communication connection with the overloaded primary cell is converted into a primary cell.

In this operation, in a case of detecting that the number of users accessing the primary cell is greater than a maximum number of users supported by the primary cell, the primary cell is considered to be in an overload operation state. In order to avoid degradation of network service quality or damage to the primary cell caused by the overload operation of the primary cell, at least one secondary cell in communication connection with the overloaded primary cell is converted into a primary cell. A part of the users causing the primary cell to be overloaded are connected into the new primary cell. By means of the conversion from the secondary cell to the primary cell, the network capacity of the whole communication system is improved.

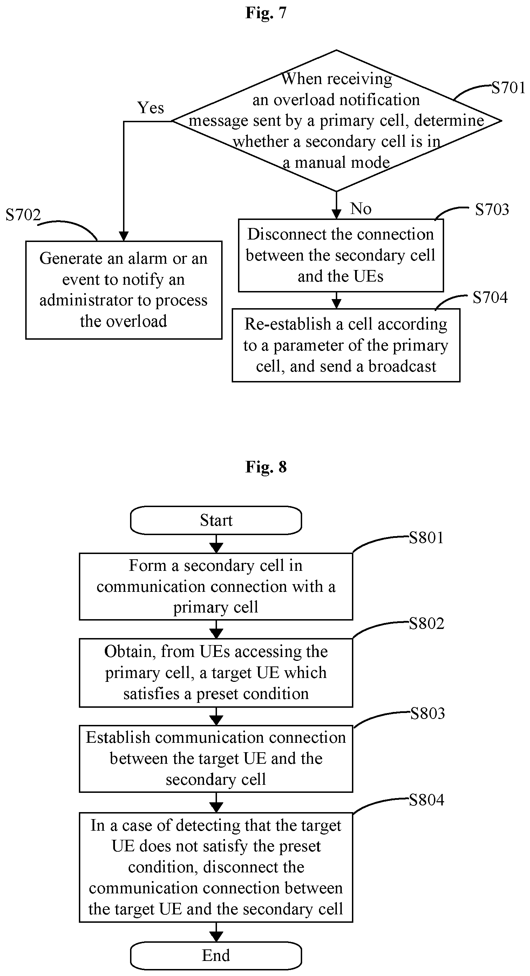

Further, in this operation, a specific operation of converting the secondary cell into the primary cell is shown in Fig. 7, including the following operations.

At operation S701, when receiving an overload notification message sent by a primary cell, it is determined whether a secondary cell is in a manual mode, in a case where the secondary cell is in the manual mode, operation S702 is executed, and otherwise, operation S703 is executed.

At operation S702, an alarm or an event is generated to notify an administrator to process the overload.

At operation S703, the connection between the secondary cell and the UEs is disconnected.

In this embodiment, the secondary cell is connected to the UEs in the form of a secondary carrier, therefore, when the connection between the secondary cell and the UEs is disconnected, the secondary cell notifies all neighboring primary cells to release the secondary carrier of the secondary cell, and does not accept a secondary carrier request any more.

At operation S704, a cell is re-established according to a parameter of the primary cell, and a broadcast is sent.

In this operation, after receiving a secondary carrier release message fed back by the primary cell, a parameter of the secondary cell is modified, and the secondary cell is configured according to the parameter of the primary cell, so as to convert the secondary cell into the primary cell.

Compared with the related art, the communication method provided by the fourth embodiment of the present application is improved on the basis of the first embodiment, and while maintaining all the technical effects of the first embodiment, when the number of users of a primary cell is overloaded, a secondary cell in communication connection with the overloaded primary cell is converted into a new primary cell, so that some UEs can be connected to the new primary cell, thereby effectively improving the network capacity of a communication system.

A fifth embodiment of the present application relates to a communication method. The communication method provided by the fifth embodiment is substantially the same as the communication method provided by the first embodiment, and the difference lies in that, on the basis of the first embodiment, the fifth embodiment additionally includes an operation of disconnecting communication connection between the target UE and the secondary cell in a case of detecting that the target UE does not satisfy a preset condition. As shown in Fig. 8, the method includes the following operations.

At operation S801, a secondary cell in communication connection with a primary cell is formed.

At operation S802, a target UE which satisfies a preset condition is obtained from UEs accessing the primary cell.

At operation S803, communication connection is established between the target UE and the secondary cell.

It should be noted that operations S801 to S803 in this embodiment are almost the same as operations S101 to S103 in the first embodiment. For details of operations S801 to S803, reference may be made to the specific description in the first embodiment, and details are not repeatedly described herein.

At operation S804, in a case of detecting that the target UE does not satisfy the preset condition, the communication connection between the target UE and the secondary cell is disconnected.

In this operation, after the target UE accesses the secondary cell, the target UE accessing the secondary cell is periodically detected to determine whether the target UE still satisfies the preset condition, and in a case of detecting that the target UE does not satisfy the preset condition, communication connection between the target UE and the secondary cell is disconnected.

Compared with the related art, the communication method provided by the fifth embodiment of the present application is improved on the basis of the first embodiment. While all the technical effects of the first embodiment are maintained, the connection between a secondary cell and a UE which does not satisfy a preset condition is periodically detected and disconnected, thereby preventing the secondary cell from being occupied by the UE not satisfying the preset condition, so that the secondary cell can better provide a network service.

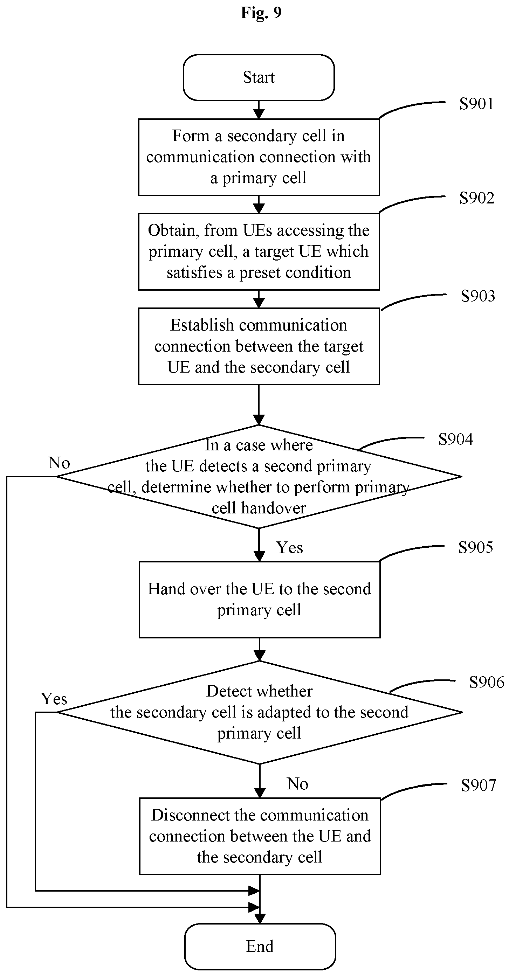

A sixth embodiment of the present application relates to a communication method. As shown in Fig. 9, the method includes the following operations.

At operation S901, a secondary cell in communication connection with a primary cell is formed.

At operation S902, a target UE which satisfies a preset condition is obtained from UEs accessing the primary cell.

At operation S903, communication connection is established between the target UE and the secondary cell.

It should be noted that operation S901 to operation S903 in this embodiment are almost the same as operation S101 to operation S103 in the first embodiment, and for details of operation S901 to operation S903, reference may be made to the specific description in the first embodiment, which is not described herein again.

At operation S904, when detecting a second primary cell, the UE determines whether to perform primary cell handover, in a case of determining to perform primary cell handover, operation S905 is performed, and otherwise, the process ends.

In this operation, when detecting the second primary cell, the UE may determine, according to an operation state and a service range of the current primary cell, whether to perform primary cell handover. For example, in a case where the current primary cell is abnormal or the UE is predicted to move out of the coverage of the current primary cell, the UE may determine to perform primary cell handover; otherwise, the UE may determine not to perform primary cell handover. It should be understood that, the foregoing is only a specific example for description in this embodiment, and is not intended to limit the present application.

At operation S905, the UE is handed over to the second primary cell.

At operation S906, it is detected whether the secondary cell is adapted to the second primary cell, and in a case where the secondary cell is adapted to the second primary cell, the flow ends; otherwise, operation S907 is executed.

In this embodiment, it may be specifically detected whether the secondary cell currently connected to the UE satisfies a carrier demand of the second primary cell, and in a case where the secondary cell currently connected to the UE satisfies the carrier demand of the second primary cell, the secondary cell currently connected to the UE is directly added to the admission information of the second primary cell. It can be understood that the foregoing is only a specific example for determining whether the secondary cell is adapted to the second primary cell in this embodiment, and in a practical application process, the determination may alternatively be made according to conditions such as a coverage area, which is not enumerated herein.

At operation S907, the communication connection between the UE and the secondary cell is disconnected.

Compared with the related art, the communication method provided by the sixth embodiment of the present application is improved on the basis of the first embodiment. While maintaining all the technical effects of the first embodiment, when a second primary cell is detected, in a case where a secondary cell currently connected to the UE is adapted to the second primary cell, the primary cell handover is directly performed without disconnecting communication connection between the UE and the secondary cell, thereby effectively simplifying the process of the primary cell handover.

The operation division of the above communication methods is only for the purpose of clear description, and during implementation, some operations may be combined into one operation or a certain operation may be divided into a plurality of operations, and as long as the operations include the same logic relationship, all the operations belong to the scope of protection of the present application. Insignificant modifications or insignificant designs introduced into the algorithms or flows without changing the core design of the algorithms and flows are within the scope of protection of the present application.

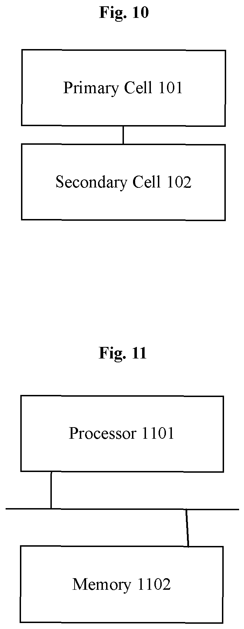

A seventh embodiment of the present application relates to a communication system. As shown in Fig. 10, the communication system includes: a primary cell 101 and a secondary cell 102 which are in communication connection with each other, wherein the number of channels for transmitting system information in the secondary cell 102 is less than a preset threshold. The primary cell 101 and the secondary cell 102 are used for performing the communication method provided in any one of the foregoing embodiments.

It can be understood that, the present embodiment is an embodiment of a communication system corresponding to the foregoing method embodiments, and therefore, the communication system provided in the present embodiment also has the technical effects of the foregoing method embodiments, which are not described herein again.

An eighth embodiment of the present application relates to a communication device. As shown in Fig. 11, the communication device includes: at least one processor 1101 and a memory 1102 in communication connection with the at least one processor 1101. The memory 1102 stores an instruction that is able to be executed by the at least one processor 1101, and the instruction, when being executed by the at least one processor 1101, causes the at least one processor 1101 to execute the communication method of the above embodiments.

The memory 1102 and the at least one processor 1101 are connected by a bus, the bus may include any number of interconnected buses and bridges, and the bus connects various circuits of the one or more processors 1101 and the memory 1102 together. The bus may also connect a variety of other circuits, such as peripheral devices, voltage regulators, and power management circuitry, which are well known in the art and therefore are not described further herein. The bus interface provides an interface between the bus and the transceiver. The transceiver may be one element or multiple elements, such as multiple receivers and transmitters, which provide means for communicating with various other devices over a transmission medium. Data processed by the at least one processor 1101 is transmitted over a wireless medium via an antenna, which may further receive data and transmit the data to the at least one processor 1101.

The at least one processor 1101 is responsible for managing the bus and general processing, and may further provide various functions, including timing, peripheral interfaces, voltage regulation, power management, and other control functions. The memory 1102 may be used to store data used by the at least one processor 1101 when performing operations.

A ninth embodiment of the present application relates to a computer-readable storage medium, which stores a computer program. The computer program, when being executed by a processor, implements the foregoing method embodiments.

That is, a person having ordinary skill in the art can understand that all or a part of the operations of the methods in the foregoing embodiments may be implemented by a program instructing relevant hardware. The program is stored in a storage medium and includes several instructions for instructing a device (which may be a single chip, a chip, or the like) or a processor to execute all or a part of the operations of the methods in the embodiments of the present application. The foregoing storage medium includes any medium that can store program codes, such as a USB flash disk, a removable hard disk, a Read-Only Memory (ROM), a Random Access Memory (RAM), a magnetic disk, or an optical disk.

Compared with the related art, in the embodiments of the present application, a secondary cell in communication connection with a primary cell is formed, and with regard to a target UE which satisfies a preset condition in the primary cell, communication connection between the target UE and the secondary cell is additionally established, thereby satisfying a network usage demand of the target UE. Since the number of channels for transmitting system information in the secondary cell is less than a preset threshold, after the UE establishes communication connection with the secondary cell, the secondary cell sends less system information to the UE, so that the UE does not identify the secondary cell as an independent cell, and does not perform cell handover, thereby effectively reducing the handover of the UE among different cells. In addition, since the number of channels for transmitting system information in the secondary cell is less than a preset threshold, the channels originally used for transmitting the system information in the secondary cell can be used for transmitting network services of the target UE, thereby effectively improving the data transmission capability of the secondary cell. Meanwhile, when the same network traffic is transmitted, the number of pieces of system information sent by the secondary cell to the UE is small, so that the power consumption of the whole communication system can be effectively reduced.

A person having ordinary skill in the art can understand that the foregoing embodiments are specific embodiments for implementing the present application, and in practical applications, various changes may be made in form and details without departing from the scope of the present application.

## Claims

1. A communication method, comprising:
establishing (S101, S401, S501, S601, S801, S901) a secondary cell in communication connection with a primary cell, the method is **characterized by** that the number of channels for transmitting system information in the secondary cell is less than a preset threshold, such that the secondary cell is not able to send a sufficient amount of the system information to User Equipment, UE, and the secondary cell does not accept direct access of the UE, wherein the system information comprises broadcast information, access information and control information;
selecting (S102, S402, S502, S602, S802, S902), from UEs connected to the primary cell, target UE which satisfies a preset condition, wherein the target UE which satisfies the preset condition is a UE a priority of which is higher than a preset priority or data traffic of which is greater than a preset traffic value, or a UE with a usage duration greater than a preset duration; and
establishing (S103, S503, S603, S803, S903) communication connection between the target UE and the secondary cell, such that channels originally used for transmitting the system information in the secondary cell transmit network services of the target UE.

2. The communication method according to claim 1, wherein establishing (S101, S401, S501, S601, S801, S901) the secondary cell in communication connection with the primary cell comprises:
establishing a new cell as the secondary cell according to a preset parameter; and
establishing communication connection between the secondary cell and the primary cell.

3. The communication method according to claim 1, wherein establishing (S101, S401, S501, S601, S801, S901) the secondary cell in communication connection with the primary cell comprises:
determining (S301) a second primary cell in communication connection with the primary cell, wherein a geographical area covered by the second primary cell at least partially overlaps with a geographical area covered by the primary cell; and
converting (S302, S303) the second primary cell into the secondary cell in a case where the number of users in the second primary cell is less than a preset threshold.

4. The communication method according to claim 1, wherein before establishing (S103, S503, S603, S803, S903) the communication connection between the target UE and the secondary cell, the method further comprises:
determining (S403), according to the priority and/or the data traffic of the target UE, a target secondary cell from a plurality of secondary cells which are in communication connection with the primary cell;
establishing (S103, S503, S603, S803, S903) the communication connection between the target UE and the secondary cell comprises:
establishing (S404) communication connection between the target UE and the target secondary cell.

5. The communication method according to claim 1, further comprising:
periodically detecting (S504) an operation state of each secondary cell, and sending a detection result to the primary cell.

6. The communication method according to claim 1, further comprising:
in a case where the primary cell is overloaded, converting (S604) a secondary cell in communication connection with the overloaded primary cell into a primary cell.

7. The communication method according to claim 1, wherein after establishing (S103) the communication connection between the target UE and the secondary cell, the method further comprises:
periodically detecting whether the target UE satisfies the preset condition; and
in a case of detecting that the target UE does not satisfy the preset condition, disconnecting (S804) the communication connection between the target UE and the secondary cell.

8. The communication method according to claim 1, wherein after establishing (S103) the communication connection between the target UE and the secondary cell, the method further comprises:
in a case where the target UE detects a second primary cell, determining (S904) whether to perform primary cell handover;
in a case of determining to perform the primary cell handover, handing over (S905) the target UE to the second primary cell; and
in a case where the secondary cell is not adapted to the second primary cell, disconnecting (S907) the communication connection between the target UE and the secondary cell.

9. The communication method according to claim 1, wherein after establishing (S103) the communication connection between the target UE and the secondary cell, the method further comprises:
providing, by the secondary cell, a network service for the target UE in a form of a secondary carrier; or,
providing, by the secondary cell, a network service for the target UE in a form of a dual-link.

10. The communication method according to claim 3, wherein converting (S302, S303) the second primary cell into the secondary cell in the case where the number of users in the second primary cell is less than the preset threshold comprises:
in the case where the number of users in the second primary cell is less than the preset threshold, removing UEs in the second primary cell from the second primary cell; and
changing a relevant parameter of the second primary cell to reduce the number of channels for transmitting the system information in the second primary cell to form the secondary cell.

11. The communication method according to claim 10, wherein a mode of changing the relevant parameter of the second primary cell comprises an automatic mode and a manual mode, wherein
in the automatic mode, a modified numerical value of the relevant parameter needing to be modified is preset, and when it is required to convert the second primary cell into the secondary cell, a preset program is executed to modify the relevant parameter into the preset numerical value;
in the manual mode, when it is required to convert the second primary cell into the secondary cell, the second primary cell generates an alarm or a notification event to notify an administrator to manually modify the relevant parameter.

12. A communication system, comprising a primary cell (101) and a secondary cell (102) which are in communication connection with each other, the method is **characterized by** that the number of channels for transmitting system information in the secondary cell (102) is less than a preset threshold; and
the primary cell (101) and the secondary cell (102) are used for executing the communication method of any one of claims 1 to 11.

13. A communication device comprising:
at least one processor (1101); and
a memory (1102) in communication connection with the at least one processor (1101); wherein
the memory (1102) stores an instruction that is able to be executed by the at least one processor (1101), and the instruction, when being executed by the at least one processor (1101), causes the at least one processor (1101) to execute the communication method of any one of claims 1 to 11.

14. A computer-readable storage medium, storing a computer program, wherein the computer program, when being executed by a processor, implements the communication method of any one of claims 1 to 11.

## Patentansprüche

1. Kommunikationsverfahren, umfassend:
Einrichten (S101, S401, S501, S601, S801, S901) einer sekundären Zelle in Kommunikationsverbindung mit einer primären Zelle, wobei das Verfahren **dadurch gekennzeichnet ist, dass** die Anzahl der Kanäle zum Übertragen von Systeminformationen in der sekundären Zelle Geringer als ein voreingestellter Schwellenwert ist, sodass die sekundäre Zelle nicht in der Lage ist, eine ausreichende Menge von Systeminformationen an das Benutzergerät, User Equipment, UE, zu senden und die sekundäre Zelle keinen direkten Zugriff des UE akzeptiert, wobei die Systeminformationen Rundsendeinformationen, Zugriffsinformationen und Steuerinformationen umfassen;
Auswählen (S102, S402, S502, S602, S802, S902), aus mit der primären Zelle verbundenen UEs, eines Ziel-UE, das eine voreingestellte Bedingung erfüllt, wobei das Ziel-UE, das die voreingestellte Bedingung erfüllt, ein UE, dessen Priorität höher als eine voreingestellte Priorität ist oder dessen Datenverkehr größer ist als ein voreingestellter Datenverkehrswert ist, oder ein UE mit einer Nutzungsdauer ist, die länger ist als eine voreingestellte Dauer ist; und
Einrichten (S103, S503, S603, S803, S903) einer Kommunikationsverbindung zwischen dem Ziel-UE und der sekundären Zelle, sodass die ursprünglich zum Übertragen der Systeminformationen in der sekundären Zelle verwendeten Kanäle Netzwerkdienste des Ziel-UE übertragen.

2. Kommunikationsverfahren nach Anspruch 1, wobei das Einrichten (S101, S401, S501, S601, S801, S901) der Kommunikationsverbindung der sekundären Zelle mit der primären Zelle umfasst:
Einrichten einer neuen Zelle als sekundäre Zelle gemäß einem voreingestellten Parameter; und
Einrichten einer Kommunikationsverbindung zwischen der sekundären Zelle und der primären Zelle.

3. Kommunikationsverfahren nach Anspruch 1, wobei das Einrichten (S101, S401, S501, S601, S801, S901) der Kommunikationsverbindung der sekundären Zelle mit der primären Zelle umfasst:
Ermitteln (S301) einer zweiten primären Zelle in Kommunikationsverbindung mit der primären Zelle, wobei sich ein durch die zweite Primärzelle abgedeckter geografischer Bereich mindestens teilweise mit einem durch die primäre Zelle abgedeckten geografischen Bereich überlappt; und
Umwandeln (S302, S303) der zweiten primären Zelle in die sekundäre Zelle in einem Fall, in dem die Anzahl von Benutzern in der zweiten primären Zelle kleiner als ein voreingestellter Schwellenwert ist.

4. Kommunikationsverfahren nach Anspruch 1, wobei vor dem Einrichten (S103, S503, S603, S803, S903) der Kommunikationsverbindung zwischen dem Ziel-UE und der sekundären Zelle das Verfahren ferner umfasst:
Ermitteln (S403), gemäß der Priorität und/oder dem Datenverkehr des Ziel-UE, einer sekundären Zielzelle aus einer Vielzahl von sekundären Zellen, die in Kommunikationsverbindung mit der primären Zelle stehen;
wobei das Einrichten (S103, S503, S603, S803, S903) der Kommunikationsverbindung zwischen dem Ziel-UE und der sekundären Zelle umfasst:
Einrichten (S404) einer Kommunikationsverbindung zwischen dem Ziel-UE und der sekundären Zielzelle.

5. Kommunikationsverfahren nach Anspruch 1, ferner umfassend:
periodisches Erkennen (S504) eines Betriebszustands jeder sekundären Zelle und Senden eines Erkennungsergebnisses an die primäre Zelle.

6. Kommunikationsverfahren nach Anspruch 1, ferner umfassend:
in einem Fall, in dem die primäre Zelle überlastet ist, Umwandeln (S604) einer sekundären Zelle in Kommunikationsverbindung mit der überlasteten primären Zelle in eine primäre Zelle.

7. Kommunikationsverfahren nach Anspruch 1, wobei das Verfahren nach dem Einrichten (S103) der Kommunikationsverbindung zwischen dem Ziel-UE und der sekundären Zelle ferner umfasst:
regelmäßiges Erkennen, ob das Ziel-UE die voreingestellte Bedingung erfüllt; und
in einem Fall des Erkennens, dass das Ziel-UE die voreingestellte Bedingung nicht erfüllt, Trennen (S804) der Kommunikationsverbindung zwischen dem Ziel-UE und der sekundären Zelle.

8. Kommunikationsverfahren nach Anspruch 1, wobei das Verfahren nach dem Einrichten (S103) der Kommunikationsverbindung zwischen dem Ziel-UE und der sekundären Zelle ferner umfasst:
in einem Fall, in dem das Ziel-UE eine zweite primäre Zelle erkennt, Ermitteln (S904), ob eine Übergabe der primären Zelle durchgeführt werden soll;
in einem Fall des Entscheidens, die Übergabe der primären Zelle durchzuführen, Übergeben (S905) des Ziel-UE an die zweite primäre Zelle; und
in einem Fall, in dem die sekundäre Zelle nicht an die zweite primäre Zelle angepasst ist, Trennen (S907) der Kommunikationsverbindung zwischen dem Ziel-UE und der sekundären Zelle.

9. Kommunikationsverfahren nach Anspruch 1, wobei das Verfahren nach dem Einrichten (S103) der Kommunikationsverbindung zwischen dem Ziel-UE und der sekundären Zelle ferner umfasst:
Bereitstellen, durch die sekundäre Zelle, eines Netzwerkdienstes für das Ziel-UE in Form eines sekundären Trägers; oder
Bereitstellen, durch die sekundäre Zelle, eines Netzwerkdienstes für das Ziel-UE in Form einer Dual-Link-Verbindung.

10. Kommunikationsverfahren nach Anspruch 3, wobei das Umwandeln (S302, S303) der zweiten primären Zelle in die sekundäre Zelle in einem Fall, in dem die Anzahl von Benutzern in der zweiten primären Zelle kleiner als ein voreingestellter Schwellenwert ist, umfasst:
in dem Fall, in dem die Anzahl von Benutzern in der zweiten primären Zelle kleiner als der voreingestellte Schwellenwert ist, Entfernen von UEs in der zweiten Primärzelle aus der zweiten Primärzelle; und
Ändern eines relevanten Parameters der zweiten primären Zelle, um die Anzahl von Kanälen zum Übertragen der Systeminformationen in der zweiten primären Zelle zu reduzieren, um die sekundäre Zelle zu bilden.

11. Kommunikationsverfahren nach Anspruch 10, wobei ein Modus des Änderns des relevanten Parameters der zweiten primären Zelle einen automatischen Modus und einen manuellen Modus umfasst, wobei
im automatischen Modus ein geänderter numerischer Wert des relevanten Parameters, der geändert werden muss, voreingestellt wird, und wenn die zweite primäre Zelle in die sekundäre Zelle umgewandelt werden muss, ein voreingestelltes Programm ausgeführt wird, um den relevanten Parameter in den voreingestellten numerischen Wert zu ändern;
im manuellen Modus, wenn die zweite primäre Zelle in die sekundäre Zelle umgewandelt werden muss, die zweite primäre Zelle ein Alarm- oder ein Benachrichtigungsereignis erzeugt, um einen Administrator zu benachrichtigen, dass er den relevanten Parameter manuell ändern soll.

12. Kommunikationssystem, das eine primäre Zelle (101) und eine sekundäre Zelle (102) umfasst, die in Kommunikationsverbindung miteinander stehen, wobei das Verfahren **dadurch gekennzeichnet ist, dass** die Anzahl von Kanälen zum Übertragen von Systeminformationen in der sekundären Zelle (102) kleiner als ein voreingestellter Schwellenwert ist; und
die primäre Zelle (101) und die sekundäre Zelle (102) zum Ausführen des Kommunikationsverfahrens nach einem der Ansprüche 1 bis 11 verwendet werden.

13. Kommunikationsvorrichtung, umfassend:
mindestens einen Prozessor (1101); und
einen Speicher (1102) in Kommunikationsverbindung mit dem mindestens einen Prozessor (1101); wobei
der Speicher (1102) eine Anweisung speichert, die durch den mindestens einen Prozessor (1101) ausführbar ist und die Anweisung, wenn sie durch den mindestens einen Prozessor (1101) ausgeführt wird, den mindestens einen Prozessor (1101) veranlasst, das Kommunikationsverfahren nach einem der Ansprüche 1 bis 11 auszuführen.

14. Computerlesbares Speicherungsmedium, auf dem ein Computerprogramm gespeichert ist, wobei das Computerprogramm, wenn es durch einen Prozessor ausgeführt wird, das Kommunikationsverfahren nach einem der Ansprüche 1 bis 11 implementiert.

## Revendications

1. Procédé de communication, comprenant :
l'établissement (S101, S401, S501, S601, S801, S901) d'une cellule secondaire en connexion de communication avec une cellule primaire, le procédé est **caractérisé en ce que** le nombre de canaux pour la transmission d'informations système dans la cellule secondaire est inférieur à un seuil prédéfini, de telle sorte que la cellule secondaire n'est pas apte à envoyer une quantité suffisante des informations système à un équipement utilisateur, UE, et la cellule secondaire n'accepte pas un accès direct de l'UE, dans lequel les informations système comprennent des informations de diffusion, des informations d'accès et des informations de commande ;
la sélection (S102, S402, S502, S602, S802, S902), parmi les UE connectés à la cellule primaire, d'un UE cible qui respecte une condition prédéfinie, dans lequel l'UE cible qui respecte la condition prédéfinie est un UE dont une priorité est plus élevée qu'une priorité prédéfinie ou dont un trafic de données est supérieur à une valeur de trafic prédéfinie, ou un UE avec une durée d'utilisation supérieure à une durée prédéfinie ; et
l'établissement (S103, S503, S603, S803, S903) d'une connexion de communication entre l'UE cible et la cellule secondaire, de telle sorte que des canaux initialement utilisés pour la transmission des informations système dans la cellule secondaire transmettent des services réseau de l'UE cible.

2. Procédé de communication selon la revendication 1, dans lequel l'établissement (S101, S401, S501, S601, S801, S901) de la cellule secondaire en connexion de communication avec la cellule primaire comprend :
l'établissement d'une nouvelle cellule en guise de cellule secondaire selon un paramètre prédéfini ; et
l'établissement d'une connexion de communication entre la cellule secondaire et la cellule primaire.

3. Procédé de communication selon la revendication 1, dans lequel l'établissement (S101, S401, S501, S601, S801, S901) de la cellule secondaire en connexion de communication avec la cellule primaire comprend :
la détermination (S301) d'une seconde cellule primaire en connexion de communication avec la cellule primaire, dans lequel une zone géographique couverte par la seconde cellule primaire chevauche au moins partiellement une zone géographique couverte par la cellule primaire ; et
la conversion (S302, S303) de la seconde cellule primaire en la cellule secondaire dans un cas où le nombre d'utilisateurs dans la seconde cellule primaire est inférieur à un seuil prédéfini.

4. Procédé de communication selon la revendication 1, dans lequel avant l'établissement (S103, S503, S603, S803, S903) de la connexion de communication entre l'UE cible et la cellule secondaire, le procédé comprend en outre :
la détermination (S403), selon la priorité et/ou le trafic de données de l'UE cible, d'une cellule secondaire cible parmi une pluralité de cellules secondaires qui sont en connexion de communication avec la cellule primaire ;
l'établissement (S103, S503, S603, S803, S903) de la connexion de communication entre l'UE cible et la cellule secondaire comprend :
l'établissement (S404) d'une connexion de communication entre l'UE cible et la cellule secondaire cible.

5. Procédé de communication selon la revendication 1, comprenant en outre :
la détection périodique (S504) d'un état de fonctionnement de chaque cellule secondaire, et l'envoi d'un résultat de détection à la cellule primaire.

6. Procédé de communication selon la revendication 1, comprenant en outre :
dans un cas où la cellule primaire est surchargée, la conversion (S604) d'une cellule secondaire en connexion de communication avec la cellule secondaire surchargée en une cellule primaire.

7. Procédé de communication selon la revendication 1, dans lequel après l'établissement (S103) de la connexion de communication entre l'UE cible et la cellule secondaire, le procédé comprend en outre :
le fait de détecter périodiquement si l'UE cible respecte la condition prédéfinie ; et
en cas de détection que l'UE cible ne respecte pas la condition prédéfinie, la déconnexion (S804) de la connexion de communication entre l'UE cible et la cellule secondaire.

8. Procédé de communication selon la revendication 1, dans lequel après l'établissement (S103) de la connexion de communication entre l'UE cible et la cellule secondaire, le procédé comprend en outre :
dans un cas où l'UE cible détecte une seconde cellule primaire, le fait de déterminer (S904) s'il faut mettre en œuvre un transfert de cellule primaire ;
dans un cas de détermination de mise en œuvre du transfert de cellule primaire, le transfert (S905) de l'UE cible vers la seconde cellule primaire ; et
dans un cas où la cellule secondaire n'est pas adaptée à la seconde cellule primaire, la déconnexion (S907) de la connexion de communication entre l'UE cible et la cellule secondaire.

9. Procédé de communication selon la revendication 1, dans lequel après l'établissement (S103) de la connexion de communication entre l'UE cible et la cellule secondaire, le procédé comprend en outre :
la fourniture, par la cellule secondaire, d'un service réseau pour l'UE cible sous forme d'une porteuse secondaire ; ou,
la fourniture, par la cellule secondaire, d'un service réseau pour l'UE cible sous forme d'une liaison double.

10. Procédé de communication selon la revendication 3, dans lequel la conversion (S302, S303) de la seconde cellule primaire en la cellule secondaire dans le cas où le nombre d'utilisateurs dans la seconde cellule primaire est inférieur au seuil prédéfini comprend :
dans le cas où le nombre d'utilisateurs dans la seconde cellule primaire est inférieur au seuil prédéfini, le fait de retirer de la seconde cellule primaire des UE dans la seconde cellule primaire ; et
le changement d'un paramètre pertinent de la seconde cellule primaire pour réduire le nombre de canaux pour la transmission des informations système dans la seconde cellule primaire pour former la cellule secondaire.

11. Procédé de communication selon la revendication 10, dans lequel un mode de changement du paramètre pertinent de la seconde cellule primaire comprend un mode automatique et un mode manuel, dans lequel
dans le mode automatique, une valeur numérique modifiée du paramètre pertinent nécessitant d'être modifié est prédéfinie, et lorsqu'il est requis de convertir la seconde cellule primaire en la cellule secondaire, un programme prédéfini est exécuté pour modifier le paramètre pertinent en la valeur numérique prédéfinie ;
dans le mode manuel, lorsqu'il est requis de convertir la seconde cellule primaire en la cellule secondaire, la seconde cellule primaire génère une alarme ou un événement de notification pour notifier à un administrateur de modifier manuellement le paramètre pertinent.

12. Système de communication, comprenant une cellule primaire (101) et une cellule secondaire (102) qui sont en connexion de communication l'une avec l'autre, le procédé est **caractérisé en ce que** le nombre de canaux pour la transmission d'informations système dans la cellule secondaire (102) est inférieur à un seuil prédéfini ; et
la cellule primaire (101) et la cellule secondaire (102) sont utilisées pour l'exécution du procédé de communication selon l'une quelconque des revendications 1 à 11.

13. Dispositif de communication comprenant :
au moins un processeur (1101) ; et
une mémoire (1102) en connexion de communication avec l'au moins un processeur (1101) ; dans lequel
la mémoire (1102) stocke une instruction qui est apte à être exécutée par l'au moins un processeur (1101), et l'instruction, lorsqu'elle est exécutée par l'au moins un processeur (1101), amène l'au moins un processeur (1101) à exécuter le procédé de communication selon l'une quelconque des revendications 1 à 11.

14. Support de stockage lisible par ordinateur, stockant un programme d'ordinateur, dans lequel le programme d'ordinateur, lorsqu'il est exécuté par un processeur, implémente le procédé de communication selon l'une quelconque des revendications 1 à 11.
